# EUROPEAN PATENT APPLICATION

(11) **EP 2 293 301 A1**
(43) Date of publication of application: **09.03.2011**
(21) Application number: 08757701.1
(22) Date of filing: 13.06.2008
(51) Int. Cl.: G11B 27/02

(54) **METHOD FOR GENERATING STREAMING MEDIA INCREMENT DESCRIPTION FILE AND METHOD AND SYSTEM FOR CUTTING IN MULTIMEDIA IN STREAMING MEDIA**

(30) Priority: 23.05.2008 CN 200810028236
(71) Applicant: Guangzhou Shiyuan Electronic Co., Ltd, Guangdong 510663 (CN)
(72) Inventor: XIE, Xiang, Guangdong 510663 (CN); YU, Wei, Guangdong 510663 (CN)
(74) Representative: Hannke, Christian
(86) International application number: PCT/CN2008/071290
(87) International publication number: WO 2009/140828

(57) **Abstract**

The present invention provides a method for generating streaming media value-added description file and a method and system for linking, inserting or embedding multimedia in streaming media. The method for linking, inserting, or embedding multimedia in streaming media comprises the following steps: generating the streaming media value-added description file corresponding to the streaming media file; establishing multimedia databases; reading the corresponding streaming media value-added description file in the course of opening or playing the streaming media file, searching for said multimedia file in said multimedia database, and judging whether said multimedia file is correlated to said characteristic information of said sampling point of said streaming media value-added description file; if it is correlated, matching said multimedia file with said characteristic information, and dynamically associating said sampling point with the link of said matched multimedia file; and prompting the users to trigger the link. Multimedia files related with point of interest of said streaming media files are linked, inserted or embedded without changing the said streaming media files.

## Description

### Field of the Invention

The present invention relates to field of communication, more particularly to a method for generating streaming media value-added description file and a method and system for linking, inserting or embedding multimedia in streaming media.

### Background of the Invention

With gradually popularization of broadband internet, digital television network system and mobile wireless network, video on demand or online program becomes more and more popular, and gets more and more clicks. Compared to linking, inserting or embedding various kinds of advertisement and living information in conventional TV programs, the mode of linking, inserting or embedding multimedia in network streaming media has a huge market potential. Existing means to linking, inserting or embedding advertisement information in streaming media are as follows.
1. Advertisements automatically pop up on the screen. As the popped-up advertisements occupy more than half of the screen, it may disturb users watching the video program and cause the users' boycott of the advertisement. Furthermore, many tools appear to block the popped-up advertisements, so the popped-up advertisements do not achieve the supposed effect.
2. Video advertisements are linked, inserted or embedded at the beginning and ending of streaming media. Such video advertisements are not closely related to streaming media, and not played directed to corresponding users of the advertised products, so the effect of advertisement is poor.
3. An existing mean to linking, inserting or embedding advertisement in streaming media is to add advertisement information related with the content of streaming media in streaming media, and generate advertisement description file. The first step is to judge whether the stored advertisement matches with the content extracted from the streaming media. If it matches, storing position information code of the advertisement file and position or time information code when the advertisement is played will be generated and added into advertisement description file. In the above mean, the storing position of the advertisement shall be previously recorded in the advertisement description file. As the advertisements constantly change and update, the advertisement description files should be modified real time when the content and storing position of the advertisement change. The computational workload will be increased and massive database is needed for dynamically storing advertisement files with various information codes. Thus the above mean lacks of generality and flexibility.

### Summary of the Invention

The present invention provide method for generating streaming media value-added description file and method and system for linking, inserting or embedding multimedia in streaming media, to link, insert or embed multi-media information related with point of interest of said streaming media file by real-time reading corresponding streaming media value-added description file without changing the present streaming media file.

One embodiment of the present invention provides a method for generating streaming media value-added description file, comprising:
sampling and analyzing point of interest in streaming media file, and generating characteristic information corresponding to said point of interest; and
marking sampling point, and recording said characteristic information of the sampling point.

Furthermore, one embodiment of the present invention provides a method for linking, inserting or embedding multimedia in streaming media, comprising:
generating the streaming media value-added description file corresponding to the streaming media file, wherein said streaming media value-added description file records the corresponding characteristic information of the sampling point by sampling and analyzing points of interest in a streaming media file;
establishing at least one multimedia database which stores at least one multimedia file and the link access to said multimedia file;
reading the corresponding streaming media value-added description file in the course of opening or playing the streaming media file, searching for said multimedia file in said multimedia database, and judging whether said multimedia file is correlated to said characteristic information of said sampling point of said streaming media value-added description file; if it is correlated, matching said multimedia file with said characteristic information, and dynamically associating said sampling point with link of said matched multimedia file; and
real time or selectively linking, inserting or embedding said matched multimedia file in streaming media when link of the said matched multimedia file is detected.

Furthermore, one embodiment of the present invention provides a system for linking, inserting or embedding multimedia in streaming media, comprising :
a streaming media file storing module, used for storing streaming media file by classes
a streaming media value-added description file generating module, used for generating the streaming media value-added description file which records the corresponding characteristic information of the sampling point by sampling and analyzing points of interest in a streaming media file;
a streaming media value-added description file storing module, used for establishing database of streaming media value-added description file, hierarchically storing streaming media value-added description files by class;
a multimedia file storing module, used for establishing at least one multimedia database, hierarchically storing multimedia files by the class of description objects;
a searching and judging module, used for searching said multimedia database when reading said streaming media value-added description file, judging whether the multimedia file of said database is correlated to said characteristic information of said sampling point of said streaming media value-added description file; if it is correlated, matching said multimedia file with said characteristic information, and dynamically associating said sampling point with link of said matched multimedia file; and
a playing module, for reading the corresponding streaming media value-added description file in the course of opening or playing the streaming media file, real time or selectively linking, inserting or embedding said matched multimedia file in streaming media when link of the said matched multimedia file is detected;
said searching and judging module respectively connects to said multimedia file storing module, said playing module and said streaming media value-added description file storing module; one side of said streaming media value-added description file generating module connects to said playing module via said streaming media file storing module, the other side connects to said playing module via said streaming media value-added description file storing module.

The method of generating streaming media value-added description file provided by one embodiment of the present invention realizes sampling and analyzing the contents of video, audio and character which users are interested in or have commercial value in the streaming media, and generating characteristic information corresponding to said point of interest, in order to add multimedia file related with said characteristic information at the sampling point, expand the information showed in one streaming media file, and provide intermediate carrier for realizing streaming media value-added. Meanwhile, the searching engine tool may detect the corresponding streaming media more accurately via streaming media value-added description file, and the utilization rate is also increased.

Effect of the method and system for linking, inserting or embedding multimedia in streaming media provided in the embodiment of the present invention is as follows.

Streaming media value-added description file generated corresponding to streaming media file can be read when the streaming media file is opened or played, without modifying the original streaming media file. By triggering link of multimedia file related to characteristic information of streaming media value-added description file, related multimedia file is linked, inserted or embedded by means of overlying pictures or picture-in-picture or suspending playing said streaming media file, and more information is provided for users.

Instead of generating multimedia description file according to multimedia file (including advertisement file), it is to generate streaming media value-added description file in one-to-one corresponding with streaming media file. So streaming media value-added description file needs no real time modification no matter whether the content or storing position in the database of multimedia file changes. It reduces the operation for matching the multimedia file with streaming media value-added description file, and optimizes the system algorithm.

Moreover, an open system can be formed by dynamically selecting different multimedia information database linking with one streaming media value-added description file.

### Brief Description of the Drawings

Fig. 1 is a flow chart of a method for generating streaming media value-added description file in accordance with the first embodiment of the present invention;
Fig. 2 is a flow chart of a method for linking, inserting or embedding multimedia in streaming media in accordance with the second embodiment of the present invention;
Fig. 3 is a structure diagram of the multimedia database of the second embodiment of the present invention;
Fig. 4 is a flow chart of a method for linking, inserting or embedding multimedia in streaming media in accordance with the third embodiment of the present invention;
Fig. 5 is a structure diagram of system for linking, inserting or embedding multimedia in streaming media in accordance with the fourth embodiment of the present invention;
Fig. 6 is a structure diagram of system for linking, inserting or embedding multimedia in streaming media in accordance with the fifth embodiment of the present invention.

### Detailed Description of the Invention

The present invention will be described in detail with reference to a few preferred embodiments thereof as illustrated in the accompanying drawings for the a thorough understanding of the technical problem to be solved, the technical solution and the effect. However, the present embodiments are to be considered in all respects as illustrative and not restrictive, and the invention is not to be limited to the details given herein.

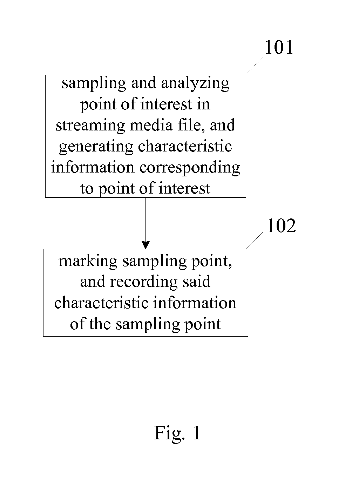

Referring to Fig.1, the first embodiment of the present invention provides a method for generating streaming media value-added description file comprising the following steps.

### Step 101:

By means of sampling manually or automatically, the first embodiment comprises the step of sampling and analyzing point of interest of images and/or voices and/or characters in said streaming media file, and generating characteristic information corresponding to said point of interest; that means, sampling the contents of video, audio and character which users are interested in or have commercial value, and constituting three independent subfolders, including subfolder of pattern, subfolder of voice and subfolder of character. Specific pattern characteristic information is generated and recorded in the subfolder of pattern, such as portrait of star, picture of the place of interest, trademark of advertised product, design of advertised product, and so on. Specific voice characteristic information is generated and recorded in the subfolder of voice, such as pronunciation of name of star, place of interest or advertised product, and the pronunciation of advertising words. Specific character characteristic information is generated and recorded in the subfolder of character, such as name of the star, place of interest or advertised product, and advertising words.

To uniformly describe the characteristic information of the above three subfolders, another embodiment of the present invention further comprises the step of generalizing key words described by characters from said point of interest of images and/or voices and/or characters in said streaming media file. For example, the keywords "Tsingtao Beer" can be generalized both for video of drinking Tsingtao Beer and the pronunciation of the name of Tsingtao Beer product.

### Step 102:

The first embodiment further comprises the steps of marking the position and/or point-in-time of sampling point while sampling and analyzing point of interest of images of streaming media, and recording said characteristic information of the sampling point. The step of marking the position and/or point-in-time of sampling point comprises marking the position where the specific pattern of certain frame appears and/or the point-in-time when the specific image or voice plays. For example, when sampling the portraits of two stars in one picture, the positions of the two portraits in the picture are respectively marked. When a frame that somebody is drinking Tsingtao Beer appears in video program, the point-in-time of the frame is marked. When a frame that somebody is playing basketball appears in video program, the point-in-time of the frame and the position of the wearing sneakers and clothes are marked.

The method of generating streaming media value-added description file provided by the first embodiment of the present invention realizes sampling and analyzing the contents of video, audio and character which users are interested in or have commercial value in the streaming media files, and generating characteristic information corresponding to said point of interest, in order to add multimedia related with said characteristic information at the sampling point, expand the information showed in one streaming media file, and provide intermediate carrier for realizing streaming media value-added.

However, the streaming media value-added description file can be independent from the streaming media file and accordance with it, or can be existed in the metadata of the streaming media without changing the play of the streaming media.

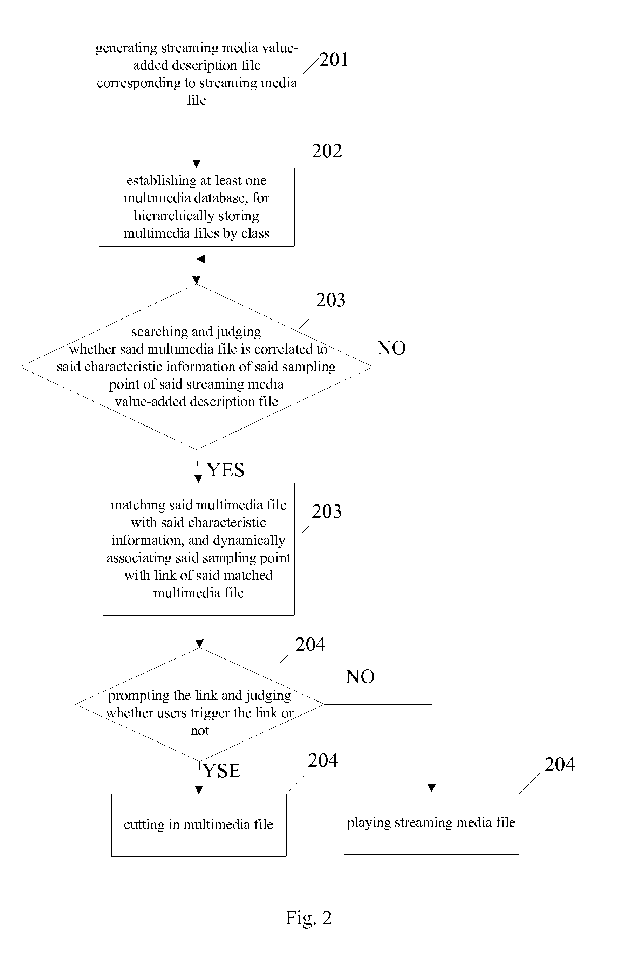

Referring to Fig. 2, the second embodiment of the present invention provides a method for linking, inserting or embedding multimedia in streaming media, comprising the following steps.

### Step 201:

The second embodiment of the present invention comprises the step of generating corresponding streaming media value-added description file according to the streaming media file stored in the streaming media website, or while creating new streaming media file. Said streaming media file is file structure which can be, but not limited to be, transmitted by stream, including images, video program, cartoon, character document, songs in MP3 format and so on.

By means of sampling manually or automatically, the present invention further comprises the steps of sampling and analyzing point of interest of images and/or voices and/or characters in said streaming media file, and generating characteristic information corresponding to said point of interest. Said characteristic information includes the specific images and/or voices and/or characters extracted from said point of interest of images and/or voices and/or characters in said streaming media file. Or said characteristic information is corresponding keyword abstractly generalized from said point of interest of images and/or voices and/or characters in said streaming media file.

The second embodiment further comprises the steps of marking the position and/or point-in-time of sampling point while sampling and analyzing point of interest of images of streaming media, and recording said characteristic information of the sampling point. The step of marking the position and/or point-in-time of sampling comprises marking the position where the specific pattern of certain frame appears and/or the point-in-time when the specific image or voice plays.

### Step 202:

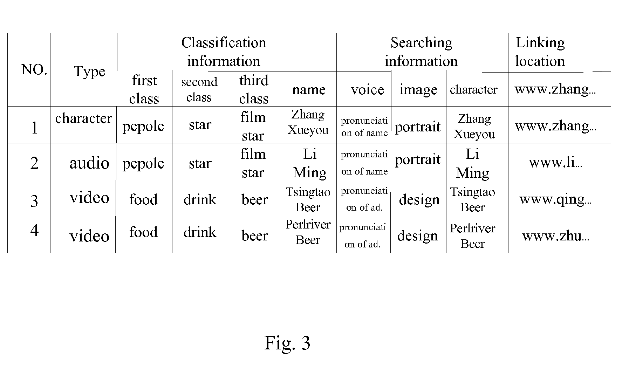

The second embodiment further comprises the step of classifying all the multimedia files and establishing at least one multimedia database. The multimedia files may include written introduction about popular science, propaganda audio about living information, cartoon video, images, advertisement program, and so on. The second embodiment further comprises the step of extracting any, or different combination, of the critical specific character, pattern, and voice from one multimedia file. Referring to Fig. 3, the multimedia database may be a classification chart, including the fields such as file number, file type, classification information, searching information, linking location and so on. The field of file type includes character file, audio file, and video file. The field of classification information means that multimedia files are stored hierarchically according to the classes of description objects. One class can be divided into multi-subclasses, and all classes and subclasses can have differentiable titles. For example, the word introduction of a star named Zhang Xueyou is recorded in the catalogue with path such as "People→ Stair→ Film Star"; an advertising video about Tsingtao Beer is recorded in the catalogue with path such as "Food→ Drink→ Beer". The field of searching information means searching respectively by voice, image, and character.

### Step 203:

During the initializing process when the streaming media file is opened or played by the steaming media storage serve or users, the system reads the corresponding streaming media value-added description file in the background, and searches for multimedia file in said multimedia database, judges whether the multimedia file is correlated to said characteristic information of said sampling point of said streaming media value-added description file. If it is correlated, the system matches said multimedia file with said characteristic information, and dynamically associates said sampling point with the link of said matched multimedia file. If it is not correlated, the system keeps on searching for other multimedia files. For example, the keyword for one sampling point recorded in streaming media value-added description file is "Tsingtao Beer", and the system finds an advertising video for Tsingtao Beer, and it judges whether they are correlated. If they are correlated, the system matches the sampling point with the link of the advertising video for Tsingtao Beer.

An open system can be formed by dynamically selecting different multimedia information database linking with one streaming media value-added description file. For example, a streaming media value-added description file is generated in advance according to one streaming media. Each video website can link streaming media with their own advertising database, which means linking with the advertisements stored in their own multimedia information database according to the characteristic information of sampling point recorded in streaming media value-added description file. For instance, regarding to characteristic information with the keyword of "Automobile", one video website may link it with related video advertisement about Red Flag Automobile, and the other video website may link it with related video advertisement about Chery Automobile.

### Step 204:

During the playing process of streaming media, system may automatically real time link, insert or embed multimedia file in streaming media when link of the said matched multimedia file is detected; or the system may prompt the link information of said matched multimedia file, to let users choose to trigger the link to play multimedia, without disturbing normal watching.

The means for system to prompt the link of multimedia file comprises: twinkling or overlaying linking icon of multimedia file on the streaming media playing screen; or, popping up a line of character introduction on or around the streaming media playing screen, to induct users to trigger the link of corresponding multimedia; or, popping up a small linked window of multimedia file at any side of the streaming media playing screen, to prompt users to click it to watch or listen. Of course the means for prompting the link of multimedia are not limited to the means described above.

The system judges whether the user triggers the link of the said multimedia file or not. If the user triggers the link, the system plays said multimedia file; otherwise, the system keeps on playing the streaming media. The means of playing multimedia are various, comprising: popping up character introduction window around the streaming media playing screen by overlapping images; or, synchronously playing multimedia file in a small linked window; or, suspending playing the streaming media, and switching to play multimedia. For example, the user opens an electronic map of a city in which position of the icon of white swan hotel appears, and clicks the twinkling linking icon, a character introduction window is popped up around the icon, and the user can view the information such as price and service of the hotel in the window. For another example, when user is watching the streaming media, he may click a small linked window about the advertisement for Tsingtao Beer popped up below the playing screen, then the system suspends playing streaming media, and switches to playing advertising video for Tsingtao Beer. The system resumes playing the streaming media when the advertising video for Tsingtao Beer is over or shut by user.

Said method for linking, inserting or embedding multimedia in streaming media can be performed in internet computer system, mobile communication system, navigation communication system, digital television network system, interactive personality TV, real-time or downloading video-on-demand equipment, or in-car mobile communication equipment, providing extensive interactive information for users.

However, the embodiments of the present invention can be applied not only when the users play streaming media file online, but also when the users download and save the streaming media file. The system synchronously and automatically searches and save the multimedia file to be linked, inserted or embedded according to the corresponding streaming media value-added description file.

By using method for linking, inserting or embedding multimedia in streaming media provided in the second embodiment of the present invention, the corresponding streaming media value-added description file can be read without modifying the original streaming media file when the streaming media file is opened or played. By triggering link of multi-media file related to characteristic information of streaming media value-added description file, related multimedia file is linked, inserted or embedded by means of overlying pictures or picture-in-picture or suspending playing said streaming media file, and more information is provided for users.

Instead of generating multimedia description file corresponding to multimedia file (including advertisement file), it is to generate streaming media value-added description file in one-to-one corresponding with streaming media. So streaming media value-added description file needs no real time modification no matter whether the content or storing position in the database of multimedia file changes. It reduces the operation for matching the multi-media with streaming media value-added description file, and optimizes the system algorithm.

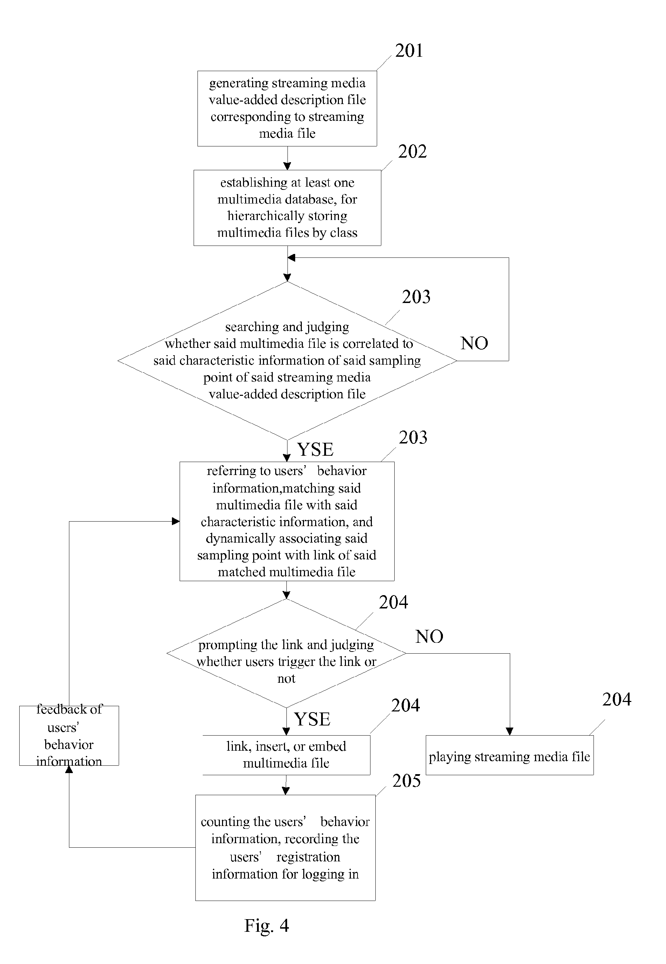

Referring to Fig. 4, the third embodiment of the present invention provides a method for linking, inserting or embedding multimedia in streaming media. Compared to the second embodiment, the third embodiment further comprises the following steps.

### Step 205:

When the users click and watch said multimedia file on internet, the system counts the users' behavior information to adjust the content of the multimedia to be linked, inserted or embedded; or, the system records the users' registration information for logging in, analyzes the user groups , sends the feedback of the users' behavior information, and executes step 203.

For example, the system may count the clicks for the linking, inserting or embedding advertisement in the online video, to assess the effect of various kinds of advertisements, and promptly adjust the content of said linking, inserting or embedding multimedia file. Registration is required for some video websites, so the system may record the user's hobby, address, contact number, and email address, and send more related or similar advertisements to the user more accurately, or referring to the user's behavior and individuality information when dynamically linked to the multimedia database next time.

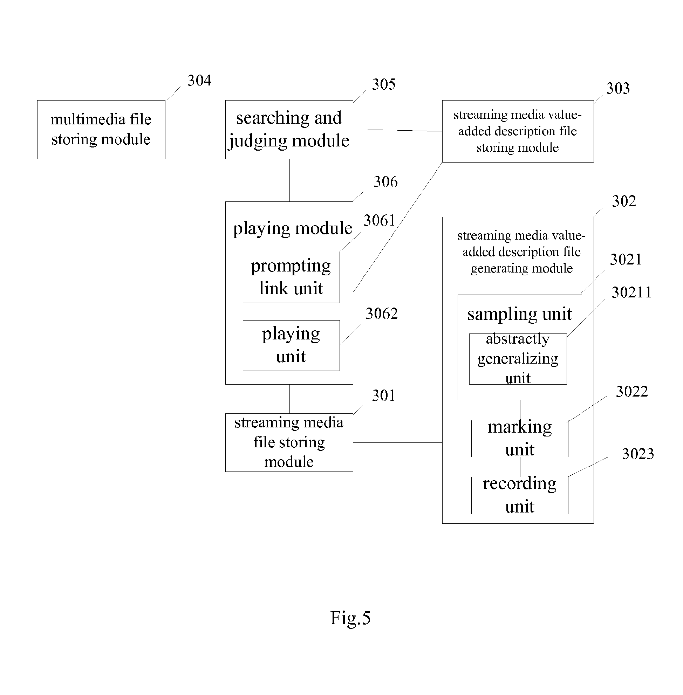

Referring to Fig. 5, the fourth embodiment of the present invention provides a system for linking, inserting or embedding multimedia in streaming media, comprising following modules:
a streaming media file storing module 301, used for storing streaming media files by class; however, said streaming media file storing module may be omitted if the existing streaming media website has already established database with various kinds of streaming media files;
a streaming media value-added description file generating module 302, used for generating the streaming media value-added description file which records the corresponding characteristic information of the sampling point by sampling and analyzing point of interest in a streaming media file;
however, the streaming media value-added description file can be independent from the streaming media file and accordance with it, or can be existed in the metadata of the streaming media without changing the play of the streaming media file;
a streaming media value-added description file storing module 303, which may be the storage serve of streaming media value-added description file, where the module 302 is stored; the module 303 is used for establishing database of streaming media value-added description files, hierarchically storing streaming media value-added description files by class;
a multimedia file storing module 304, which may be the storage serve of multimedia files, used for establishing at least one multimedia database, hierarchically storing multimedia files by the class of description objects;
a searching and judging module 305, used for searching said multimedia database when reading said streaming media value-added description file, judging whether the multimedia file of said database is correlated to said characteristic information of said sampling point of said streaming media value-added description file; if it is correlated, matching said multimedia file with said characteristic information, and dynamically associating said sampling point with link of said matched multimedia file;
a playing module 306, used for reading the corresponding streaming media value-added description file in the course of opening or playing the streaming media file, real time or selectively linking, inserting or embedding said matched multimedia file in streaming media when link of the said matched multimedia file is detected;
said searching and judging module 305 respectively connects to said multimedia file storing module 304, said playing module 306 and said streaming media value-added description file storing module 303; one side of said streaming media value-added description file generating module 302 connects to said playing module 306 via said streaming media file storing module 301, the other side connects to said playing module 306 via said streaming media value-added description file storing module 303.

Said streaming media value-added description file generating module 305 includes:
a sampling unit 3021, for sampling and analyzing point of interest of images and/or voices and/or characters in said streaming media file, and generating characteristic information corresponding to said point of interest; and
a marking unit 3022, for marking the position and/or point-in-time of sampling point when sampling and analyzing point of interest; and
a recording unit 3023, for recording said characteristic information of the sampling point.

Said playing module 306 includes:
a prompting link unit 3061, for reading the corresponding streaming media value-added description file in the course of opening or playing the streaming media file, prompting the users to trigger the link when the link of the said matched multimedia file is detected; and
a playing unit 3062, for judging whether the user triggers the link of the said multimedia or not; if the user triggers the link, the system plays said multimedia file; otherwise, the system keeps on playing the streaming media file.

In another embodiment, said sampling unit 3021 further includes:
an abstractly generalizing unit 30211, for generalizing key words described by characters from said point of interest of images and/or voices and/or characters in said streaming media file.

The system for linking, inserting or embedding multimedia in streaming media provided in the fourth embodiment is easy to be constituted and the components of the system are relatively less. A database of streaming media value-added description file may be established firstly, and then dynamically linked with different databases of multimedia files. Thus it is not necessary to consider the content and position of the multimedia file previously. Sharing and utilization rate of resource are increased, and an opening system for linking, inserting or embedding multimedia in streaming media is established.

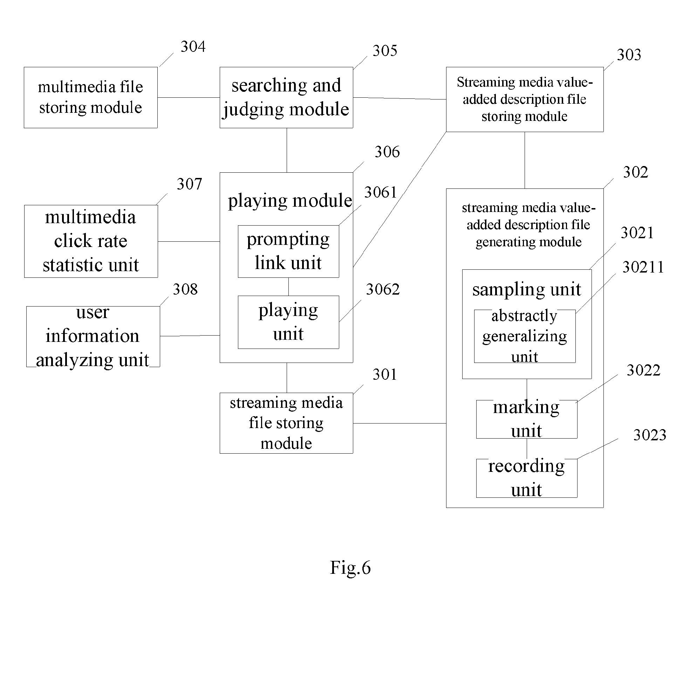

Referring to Fig. 6, the fifth embodiment of the present invention provides a system for linking, inserting or embedding multimedia in streaming media. Compared to the fourth embodiment, the fifth embodiment further comprises the following units.
a multimedia click rate statistic unit 307, for counting the users' behavior information when the users click and watch said multimedia file on internet; for example, counting the clicks for the multimedia to analyze the effect of the multimedia file;
a user information analyzing unit 308, for recording the users' registration information for logging in when the users click and watch said multimedia file on internet, in order to enhance the connection between the supplier of multimedia file and users, or match corresponding multimedia files more effectively according to the users' behavior and individual information;
said multimedia click rate statistic unit 307 and said user information analyzing unit 308 respectively connect to said playing module 306.

The system for linking, inserting or embedding multimedia in streaming media provided in the fifth embodiment can offer stronger function in linking, inserting or embedding multimedia in streaming media, increase a new advertisement delivery platform, and make it more convenient for the advertiser to analyze the effect of the delivered advertisements and contact the users further.

It is understood that the invention may be embodied in other forms without departing from the spirit thereof. Thus, the present examples and embodiments are to be considered in all respects as illustrative and not restrictive, and the invention is not to be limited to the details given herein.

## Claims

1. A method for generating streaming media value-added description file, comprising:
sampling and analyzing point of interest in streaming media file, and generating characteristic information corresponding to said point of interest; and
marking sampling point, and recording said characteristic information of the sampling point.

2. The method for generating streaming media value-added description file of claim 1, further comprising:
sampling and analyzing point of interest of images and/or voices and/or characters in said streaming media file, and generating characteristic information corresponding to said point of interest; and
marking the position and/or point-in-time of sampling point , and recording said characteristic information of the sampling point.

3. The method for generating streaming media value-added description file of any one of claim 1 or 2, wherein said characteristic information includes the specific images and/or voices and/or characters extracted from said point of interest of images and/or voices and/or characters in said streaming media file.

4. The method for generating streaming media value-added description file of any one of claim 1 or 2, wherein said characteristic information is corresponding keyword abstractly generalized from said point of interest of images and/or voices and/or characters in said streaming media file.

5. A method for linking, inserting, or embedding multimedia in streaming media, comprising:
generating the streaming media value-added description file corresponding to the streaming media file, wherein said streaming media value-added description file records the corresponding characteristic information of the sampling point by sampling and analyzing points of interest in a streaming media file;
establishing at least one multimedia database which stores at least one multimedia file and the link access to said multimedia file;
reading the corresponding streaming media value-added description file in the course of opening or playing the streaming media file, searching for said multimedia file in said multimedia database, and judging whether said multimedia file is correlated to said characteristic information of said sampling point of said streaming media value-added description file; if it is correlated, matching said multimedia file with said characteristic information, and dynamically associating said sampling point with link of said matched multimedia file; and
real time or selectively linking, inserting, or embedding said matched multimedia file in streaming media when link of the said matched multimedia file is detected.

6. The method for linking, inserting, or embedding multimedia in streaming media of claim 5, wherein said step of generating the streaming media value-added description file corresponding to the streaming media file, comprising:
sampling and analyzing point of interest of images and/or voices and/or characters in said streaming media file, and generating characteristic information corresponding to said point of interest; and
marking the position and/or point-in-time of sampling point , and recording said characteristic information of the sampling point.

7. The method for linking, inserting, or embedding multimedia in streaming media of claim 6, wherein said characteristic information includes the specific images and/or voices and/or characters extracted from said point of interest of images and/or voices and/or characters in said streaming media file.

8. The method for linking, inserting, or embedding multimedia in streaming media of claim 6, wherein said characteristic information is corresponding keyword abstractly generalized from said point of interest of images and/or voices and/or characters in said streaming media file.

9. The method for linking, inserting, or embedding multimedia in streaming media of claim 6, wherein said step of marking the position and/or point-in-time of sampling point, comprising marking the position where the specific pattern of certain frame appears and/or the point-in-time when the specific image or voice plays.

10. The method for linking, inserting, or embedding multimedia in streaming media of claim 5, wherein multimedia files in said multimedia database are stored hierarchically according to the classes of description objects, one class can be divided into multi-subclasses, and all classes and subclasses can have differentiable titles.

11. The method for linking, inserting, or embedding multimedia in streaming media of any one of claims 5-10, wherein when the users download and save said streaming media file, the system automatically searches and saves multimedia file to be linked, inserted or embedded according to said corresponding streaming media value-added description file.

12. The method for linking, inserting, or embedding multimedia in streaming media of any one of claims 5-10, further comprising:
when the users click and watch said multimedia file on internet, the users' behavior information is counted for adjusting the content of linking, inserting, or embedding multimedia file; or
the users' registration information of logging in is recorded for analyzing user groups who watch said multimedia file.

13. The method for linking, inserting, or embedding multimedia in streaming media of claim 12, wherein said method can be performed in internet computer system, mobile communication system, navigation communication system, digital television network system, Interactive Personality TV, real-time or downloading video-on-demand equipment, or in-car mobile communication equipment.

14. A system for linking, inserting, or embedding multimedia in streaming media, comprising a streaming media file storing module for storing streaming media file by classes ;
wherein said system further includes:
a streaming media value-added description file generating module, used for generating the streaming media value-added description file which records the corresponding characteristic information of the sampling point by sampling and analyzing point of interest in a streaming media file;
a streaming media value-added description file storing module, used for establishing database of streaming media value-added description file, hierarchically storing streaming media value-added description files by class;
a multimedia file storing module, used for establishing at least one multimedia database, hierarchically storing multimedia files by the class of description objects;
a searching and judging module, used for searching said multimedia database when reading said streaming media value-added description file, judging whether the multimedia file of said database is correlated to said characteristic information of said sampling point of said streaming media value-added description file; if it is correlated, matching said multimedia file with said characteristic information, and dynamically associating said sampling point with link of said matched multimedia file; and
a playing module, for reading the corresponding streaming media value-added description file in the course of opening or playing the streaming media file, real time or selectively linking, inserting, or embedding said matched multimedia file in streaming media when link of the said matched multimedia file is detected;
said searching and judging module respectively connects to said multimedia file storing module, said playing module and said streaming media value-added description file storing module; one side of said streaming media value-added description file generating module connects to said playing module via said streaming media file storing module, the other side connects to said playing module via said streaming media value-added description file storing module.

15. The system for linking, inserting, or embedding multimedia in streaming media of claim 14, wherein said streaming media value-added description file generating module includes:
a sampling unit, for sampling and analyzing point of interest of images and/or voices and/or characters in said streaming media file, and generating characteristic information corresponding to said point of interest; and
a marking unit, for marking the position and/or point-in-time of sampling point when sampling and analyzing point of interest; and
a recording unit, for recording said characteristic information of the sampling point.

16. The system for linking, inserting, or embedding multimedia in streaming media of claim 15, wherein said sampling unit includes:
an abstractly generalizing unit, for generalizing key words described by characters from said point of interest of images and/or voices and/or characters in said streaming media file.

17. The system for linking, inserting, or embedding multimedia in streaming media of claim 16, wherein said playing module includes:
a prompting link unit, for reading the corresponding streaming media value-added description file in the course of opening or playing the streaming media file, prompting the users to trigger the link when the link of the said matched multimedia file is detected; and
a playing unit, for real time or selectively linking, inserting, or embedding said matched multimedia file.

18. The system for linking, inserting, or embedding multimedia in streaming media of any one of claims 14-17, further including:
a multimedia click rate statistic unit, for counting the users' behavior information when the users click and watch said multimedia file on internet;
a user information analyzing unit, for recording the users' registration information for logging in when the users click and watch said multimedia file on internet.
